# EUROPÄISCHE PATENTANMELDUNG

(11) **EP 4 642 013 A1**
(43) Veröffentlichungstag der Anmeldung: **29.10.2025**
(21) Anmeldenummer: 24171974.9
(22) Anmeldetag: 23.04.2024
(51) Int. Cl.: H04L 67/567, H04L 9/40, H04L 67/568, H04L 9/32

(54) **VERFAHREN ZUR VERSCHLÜSSELTEN KOMMUNIKATION IN EINEM INSTITUTIONELLEN ANFRAGESYSTEM ZUM ABRUFEN VON PERSONENBEZOGENEN DATEN**

(71) Anmelder: Research Industrial Systems Engineering (RISE) Forschungs-, Entwicklungs- und Grossprojektberatung GmbH, 2320 Schwechat (AT)
(72) Erfinder: Grechenig, Thomas, 1040 Wien (AT); Schönbauer, Franz, 1040 Wien (AT)
(74) Vertreter: Schwarz & Partner Patentanwälte GmbH

(57) **Zusammenfassung**

Die Erfindung betrifft Verfahren zur verschlüsselten Kommunikation in einem institutionellen Anfragesystem zum Abrufen von personenbezogenen Daten (2),
wobei im genannten System (1) eine Datenablageeinrichtung (6) vorgesehen ist und eine Institution (4) zum Senden einer Nachricht mit einer Anfrage (7) von personenbezogenen Daten (2) an einen Anbieter (5), oder umgekehrt, die folgenden Schritte durchführt: durch die sendende Institution (4) oder den sendenden Anbieter (5):
- Erstellen der Nachricht,
- Inhaltsverschlüsseln der Nachricht, wobei die inhaltsverschlüsselte Nachricht nur von einer ausgewählten empfangenden Institution (4) oder einem ausgewählten empfangenden Anbieter (5) entschlüsselbar ist,
- Senden der inhaltsverschlüsselten Nachricht über eine transportverschlüsselte Kommunikation an die Datenablageeinrichtung (6),

durch die Datenablageeinrichtung (6):
- Empfangen und Speichern der inhaltsverschlüsselten Nachricht,

durch die empfangende Institution (4) oder den empfangenden Anbieter (5):
- Abrufen der inhaltsverschlüsselten Nachricht über eine transportverschlüsselte Kommunikation von der Datenablageeinrichtung (6),
- Entschlüsseln der Nachricht.

## Beschreibung

Die Erfindung betrifft ein Verfahren zur verschlüsselten Kommunikation in einem institutionellen Anfragesystem zum Abrufen von personenbezogenen Daten, wobei das Verfahren in einem System durchgeführt wird, in dem eine anfragende Institution, insbesondere Behörde, und ein personenbezogene Daten speichernder Anbieter, insbesondere auch Telekommunikationsprovider, teilnehmen.

Seit geraumer Zeit besteht das Bedürfnis von Strafverfolgungsbehörden, Telekommunikationsprovider dazu verpflichten personenbezogene Daten über einen gewissen Zeitraum zu speichern und im Rahmen von Ermittlungsverfahren an die Strafverfolgungsbehörden herauszugeben.

In einem Beispiel bezieht eine Person Leistungen von einem Telekommunikationsprovider, beispielswiese in Form eines Mobilfunkvertrages. Aus betrieblichen Gründen, z.B. für die Abrechnung, kann der Telekommunikationsprovider Telekommunikationsdaten von seinen Teilnehmern über einen bestimmten Zeitraum speichern. Wenn nun eine Institution wie eine Strafverfolgungsbehörde in Erfahrung bringen möchte, ob diese Person in einem für eine Straftat relevanten Zeitraum Telefonate geführt hat, stellt diese eine Anfrage bei dem genannten Telekommunikationsprovider und anderen Teilnehmern nach den personenbezogenen Daten. Diese Vorgangsweise ist jedoch aus mehreren Gründen überaus risikobehaftet, insbesondere da diese Daten auf dem Kommunikationsweg vom Anbieter an die Institution von einem Dritten abgehört werden könnten und so in die Öffentlichkeit gelangen würden, was zu schwerwiegenden Schäden für die betreffende Person oder das Ermittlungsverfahren führen könnte.

Um die obigen Erkenntnisse zusammenzufassen, bestehen somit zwei widersprüchliche Aufgabenstellungen für das eingangs genannte System. Einerseits soll das System überprüfbar bleiben, um möglichst a priori zu verhindern, dass Institutionen ihre Befugnisse überschreiten und willkürlich personenbezogene Daten anfordern, sowie nachträglich eindeutig durch unverfälschbare Protokolle sichergestellt werden, dass vollständig nachvollzogen werden kann wie Daten angefordert und geliefert wurden. Andererseits soll das System jedoch besonders sicher gemacht werden, um das Auslesen der personenbezogenen Daten durch Dritte zu verhindern.

In einem anderen Beispiel könnte sich eine Person einer Gesundheitskontrolle unterziehen, wofür Tests in mehreren Laboren durchgeführt werden, welche somit als Anbieter auftreten. Ein Ärztezentrum könnte danach die Tests von den Laboren anfordern, wobei hier im Wesentlichen dieselben Rahmenbedingungen wie bei dem Zusammenspiel der Sicherheitsbehörden und der Telekommunikationsprovider vorliegen. Einerseits darf das Ärztezentrum nicht willkürlich personenbezogene Daten anfordern, sodass die Kommunikationsvorgänge überprüfbar bleiben sollen, und andererseits muss verhindert werden, dass die personenbezogenen Daten am Kommunikationsweg nicht von Dritten auslesbar sind.

Es ist somit die Aufgabe der Erfindung, eine technische Lösung zur Umsetzung eines Verfahren zur verschlüsselten Kommunikation in einem institutionellen Anfragesystem zum Abrufen von personenbezogenen Daten bereitzustellen.

Diese Aufgabe wird gelöst durch ein Verfahren zur verschlüsselten Kommunikation in einem institutionellen Anfragesystem zum Abrufen von personenbezogenen Daten, wobei das Verfahren in einem System durchgeführt wird, in dem eine anfragende Institution, insbesondere Behörde, und ein personenbezogene Daten speichernder Anbieter, insbesondere auch Telekommunikationsprovider, teilnehmen, wobei im genannten System ferner eine Datenablageeinrichtung vorgesehen ist und eine Institution zum Senden einer Nachricht mit einer Anfrage von personenbezogenen Daten an einen Anbieter, und/oder ein Anbieter zum Senden einer Nachricht mit einer Antwort mit personenbezogenen Daten an eine Institution die folgenden Schritte durchführt:
durch die Institution oder den Anbieter:
   - Erstellen der Nachricht,
   - Inhaltsverschlüsseln der Nachricht, wobei die inhaltsverschlüsselte Nachricht nur von einer ausgewählten Institution oder einem ausgewählten Anbieter entschlüsselbar ist,
   - Senden der inhaltsverschlüsselten Nachricht über eine transportverschlüsselte Kommunikation an die Datenablageeinrichtung, wobei gegebenenfalls auch ein von der jeweiligen Institution oder dem jeweiligen Anbieter erzeugter Protokolldatensatz transportverschlüsselt (aber nicht inhaltsverschlüsselt) an die Datenablageeinrichtung gesandt wird,
durch die Datenablageeinrichtung:
   - Empfangen und Speichern der inhaltsverschlüsselten Nachricht,
   - gegebenenfalls Empfangen und Speichern des Protokolldatensatzes
durch jene Institution oder jenen Anbieter, an die bzw. den die inhaltsverschlüsselte Nachricht adressiert ist:
   - Abrufen der inhaltsverschlüsselten Nachricht über eine transportverschlüsselte Kommunikation von der Datenablageeinrichtung,
   - Entschlüsseln der Nachricht.

Durch das erfindungsgemäße Verfahren wird eine Möglichkeit geschaffen, personenbezogene Daten zwischen Institutionen und Anbietern zu übermitteln, wobei eine Datenablageeinrichtung eingesetzt wird, die als "blinde" zentrale Stelle agiert, d.h. durch die Inhaltsverschlüsselung der Nachricht diese nicht auslesen kann. Weiterhin gewährleistet die Datenablageeinrichtung jedoch auch Transparenz und Nachvollziehbarkeit, da die inhaltsverschlüsselten Nachrichten nicht über beliebige Cloud-Server zwischen den Institutionen und Anbietern gesandt werden können. In anderen Worten werden alle Nachrichten zum Abrufen von personenbezogenen Daten zwischen den Institutionen und den Anbietern nur über die Datenablageeinrichtung gesandt.

Entsprechend dem erfindungsgemäßen Verfahren findet somit eine doppelte Verschlüsselung statt, nämlich einmal als Transportverschlüsselung, z.B. HTTPS, und einmal als Inhaltsverschlüsselung. Die Transportverschlüsselung findet zwischen den eigentlichen Kommunikationsteilnehmern statt und die Inhaltsverschlüsselung zwischen dem Sender und dem designierten End-Empfänger der Nachricht.

Zusammengefasst kann die Abfrage von personenbezogenen Daten für alle Betroffenen möglichst transparent, rechtssicher und nachvollziehbar gestaltet werden, wobei sämtliche Abfragen ausschließlich über die so genannte Datenablageeinrichtung erfolgen. Sowohl Anfragen von Behörden (Institutionen) als auch deren Beantwortung durch die Provider (Anbieter) sind über diese abzuwickeln, wodurch eine Art "Trusted-Third-Party" die Abwicklung und bevorzugt auch eine Protokollierung aller Anfragen vornimmt. Dadurch können unautorisierte oder "geheime" Anfragen praktisch - und nicht bloß rechtlich - verhindert werden. Der Auskunft gebende Anbieter holt nach erfolgter Notifikation durch die Datenablageeinrichtung die verschlüsselte Anfrage bei der Datenablageeinrichtung ab, entschlüsselt diese, extrahiert die angeforderten Vorrats- oder Verbindungsdaten (d.h. die personenbezogenen Daten) aus seinem Datenbestand und gibt diese in Form einer verschlüsselten Antwort an die Datenablageeinrichtung zurück. Dort holt die Institution die Daten wieder ab.

Zur Inhaltsverschlüsselung können folgende Schritte durchgeführt werden:
durch die sendende Institution oder den sendenden Anbieter:
   - Erzeugen eines symmetrischen Schlüssels,
   - Abrufen eines Zertifikats der empfangenden Institution oder des empfangenden Anbieters, an welche bzw. welchen die Nachricht gesandt werden soll,
   - Inhaltsverschlüsseln der Nachricht mit dem symmetrischen Schlüssel,
   - Verschlüsseln des symmetrischen Schlüssels mit einem im Zertifikat enthaltenen öffentlichen Schlüssel,
   - Mitsenden des verschlüsselten symmetrischen Schlüssels mit der inhaltsverschlüsselten Nachricht,
und wobei die empfangende Institution oder der empfangende Anbieter zusätzlich die folgenden Schritte durchführt:
   - Entschlüsseln des symmetrischen Schlüssels mit einem privaten Schlüssels der empfangenden Institution bzw. des empfangenden Anbieters, und
   - Entschlüsseln der inhaltsverschlüsselten Nachricht mit dem symmetrischen Schlüssel.

Auch das Inhaltsverschlüsseln kann somit durch eine doppelte Verschlüsselung gesichert werden, wobei die Nachricht einerseits durch einen besonders sicheren symmetrischen Schlüssel, der bevorzugt aber nicht zwingend nach AES-256 gebildet wurde, verschlüsselt wird. Damit auch die empfangende Institution oder der empfangende Anbieter Kenntnis über diesen symmetrischen Schlüssel erlangt, wird dieser mittels eines öffentlichen Schlüssels der empfangenden Institution oder des empfangenden Anbieters verschlüsselt und mitübertragen.

Zur Bildung des symmetrischen Schlüssels wird bevorzugt vorgesehen, dass die sendende Institution oder der sendende Anbieter eine Zufallszahl erzeugt, bevorzugt indem manuell ein Entropie-Pool gefüllt wird (z.B. mittels eines "Shake-the-mouse"-Verfahrens, bei welchem durch eine manuelle Bewegung einer Maus unabhängig von möglichen Schwächungen betriebseigenen Zufallszahlengeneratoren Zufallszahlen generiert werden) und daraus eine Zufallszahl gewonnen wird, und aus der Zufallszahl der symmetrische Schlüssel erstellt wird. Der symmetrische Schlüssel könnte aber auch auf eine andere Art und Weise erzeugt werden.

Alternativ zu der vorgenannten Ausführungsform mit symmetrischen Schlüssel könnte die sendende Institution oder der sendende Anbieter die folgenden Schritte durchführen:
- Abrufen eines Zertifikats des Anbieters oder der Institution, an welche die Nachricht gesandt werden soll,
- Inhaltsverschlüsseln der Nachricht mit einem im Zertifikat enthaltenen öffentlichen Schlüssels des Anbieters,
und wobei die empfangende Institution oder der empfangende Anbieter zusätzlich die folgenden Schritte durchführt:
- Entschlüsseln der inhaltsverschlüsselten Nachricht mit einem privaten Schlüssels dieser Institution bzw. dieses Anbieters.
Dies ermöglicht eine Inhaltsverschlüsselung, die auch ohne das Generieren eines symmetrischen Schlüssels möglich ist.

In einer weiteren bevorzugten Ausführungsform kann das Verfahren den Schritt des Signierens der inhaltsverschlüsselten Nachricht mit einem privaten Schlüssel der sendenden Institution oder des sendenden Anbieters umfassen, wobei die empfangende Institution oder der empfangende Anbieter die Signatur der inhaltsverschlüsselten Nachricht mittels eines in einem Zertifikat der sendenden Institution oder des sendenden Anbieters enthaltenen öffentlichen Schlüssels prüft. Hierdurch wird ermöglicht, dass eine sekundäre Validierung des Inhalts stattfinden kann, d.h. ohne das Transportsystem, also außen vorbei durch Prüfen gegen einen externen Webseite des Senders der Nachricht. Dadurch kann auch die empfangende Institution oder der empfangende Anbieter die Herkunft der verschlüsselten Nachricht überprüfen, d.h. überprüfen, ob diese auch von einem dem Zertifikat zugehörigen Absender stammt.

Um weiters sicherzustellen, dass die Nachricht am Transportweg bzw. in der Ablageeinrichtung nicht manipuliert wurde, kann das Verfahren den Schritt des Bildens eines ersten Hashwerts über die Nachricht vor dem Inhaltsverschlüsseln und transportverschlüsseltes Senden des ersten Hash-Wertes umfassen, entweder wie die Nachricht inhaltsverschlüsselt oder unverschlüsselt, an die Datenablageeinrichtung und von der Datenablageeinrichtung an die empfangende Institution oder den empfangenden Anbieter, wobei die empfangende Institution oder der empfangende Anbieter nach dem Entschlüsseln überprüft, ob ein Vergleichs-Hash-Wert über die entschlüsselte Nachricht dem ersten Hash-Wert entspricht.

In der letztgenannten Variante kann zusätzlich vorgesehen werden, dass der erste Hash-Wert vor dem Senden zusätzlich mit einer extern überprüfbaren Signatur signiert wird und die empfangende Institution oder der empfangende Anbieter den signierten ersten Hash-Wert zur Überprüfung der Signatur an eine externe Überprüfungsinstanz sendet. Somit kann auch eine externe Signaturprüfung im erfindungsgemäßen Verfahren umgesetzt werden. Es versteht sich, dass die signierte Nachricht nicht als solche an eine externe Überprüfungseinheit gesandt werden kann, sodass erfindungsgemäß vorgesehen wird, einen Hash-Wert der Nachricht zu signieren, sodass dieser später zur Überprüfung an die externe Überprüfungseinheit gesandt werden kann.

Wie bereits eingangs erläutert handelt es sich bei der Datenablageeinrichtung um ein "blindes" Modell, d.h. im Wesentlichen einen Rechner, der eine Ablage für nicht von ihm selbst lesbare Nachrichten bildet. In diesem System kann zusätzlich vorgesehen werden, dass alle Teilnehmer regelmäßig überprüfen, ob inhaltsverschlüsselte Nachrichten für sie an der Datenablageeinrichtung vorliegen. Bevorzugt wird jedoch vorgesehen, dass die Datenablageeinrichtung nach dem Empfangen und Speichern einer inhaltsverschlüsselten Nachricht den folgenden Schritt durchführt:
- Benachrichtigen jener Institution oder jenes Anbieter, welche der designierte Empfänger der inhaltsverschlüsselten Nachricht ist, über das Vorliegen der Nachricht.
In anderen Worten werden die Teilnehmer von der Ablageeinrichtung informiert, sobald eine inhaltsverschlüsselte Nachricht für sie vorliegt.

An dieser Stelle sei festgehalten, dass es sich bei dem hierin beschriebenen System um ein abgeschlossenes System handeln kann, bei das ohne Zertifikate von Dritten auskommen kann. In anderen Worten liegt für jede Institution und jeden Anbieter in diesem System ein Zertifikat vor, das bevorzugt auf der Datenablageeinrichtung hinterlegt ist. Wenn hierin davon gesprochen wird, dass ein Zertifikat abgerufen wird, wird dieses bevorzugt von der Datenablageeinrichtung abgerufen.

Für dieses abgeschlossene Zertifikatsystem kann bevorzugt ein weiterer Sicherheitsmechanismus mittels sogenannter Fingerprints der Zertifikate vorgesehen werden, und zwar kann eine Validierungseinrichtung vorgesehen werden, welche Vergleichs-Hash-Werte der Zertifikate der Institutionen und Anbieter speichert, wobei die Institutionen und Anbieter Hash-Werte von Zertifikaten bilden, die von der Datenablageeinrichtung empfangen wurden und diese mit den Vergleichs-Hash-Werten vergleicht, die von der Validierungseinrichtung empfangen wurden.

Eine weitere Sicherheitsstufe für das abgeschlossene Zertifikatsystem kann vorgesehen werden, indem in der Datenablageeinrichtung ein Root-Zertifikat mit einem öffentlichen Root-Schlüssel hinterlegt ist und an die Institutionen und Anbieter gesandt wird, wobei Zertifikate von Institutionen und Anbietern mit einem privaten Root-Schlüssel der Datenablageeinrichtung Root-signiert werden, bevor diese an die Institutionen und Anbieter gesandt werden, und wobei die Institutionen und Anbieter die Root-Signatur eines von der Datenablageeinrichtung empfangenen Zertifikats einer Institution oder eines Anbieters mittels des Root-Zertifikats abgleichen.

Zur obigen Ausführungsform mit Root-Zertifikat sei noch hervorgehoben, dass dadurch ein vollständig abgeschlossenes Zertifikatsystem geschaffen werden kann. Insbesondere kann der private Root-Schlüssel ausschließlich dazu herangezogen werden, die genannten Zertifikate der Institutionen und Anbieter zu signieren, und es sollen insbesondere keine anderen Zertifikate für andere Kommunikationszwecke mit diesem privaten Root-Schlüssel signiert werden. Auch die Zertifikate der Institutionen und Anbieter sollen ausschließlich für die hierin beschriebenen Zwecke eingesetzt werden und nicht für andere Kommunikationszwecke herangezogen werden. In der Praxis erzeugen dann die Institutionen und Anbieter lokal ihre privaten Schlüssel und die zugehörigen Zertifikate mit den öffentlichen Schlüsseln. Danach werden die Zertifikate von der jeweiligen Institution oder dem jeweiligen Anbieter zur Datenablageeinrichtung bzw. dem Betreiber der Datenablageeinrichtung verbracht (gegebenenfalls in Personam, wonach der Betreiber beispielsweise eine Ausweiskontrolle von der das Zertifikat übergebenden Person durchführen kann, um zu bestätigen, dass das Zertifikat auch tatsächlich von der jeweiligen Institution oder dem jeweiligen Anbieter stammt. Danach kann das nun in der Datenablageeinrichtung vorliegende Zertifikat mit dem privaten Root-Schlüssel signiert werden und den Institutionen und Anbietern zum Abruf bereitgestellt werden.

Wie eingangs erläutert werden die Nachrichten inhaltsverschlüsselt und damit von der Datenablageeinrichtung an sich nicht auslesbar. Damit die Datenablageeinrichtung jedoch Anfragen zu zugehörigen Antworten korrelieren kann und/oder weiß, an wen die inhaltsverschlüsselte Nachricht adressiert ist, können verschiedene Verfahren zum Einsatz kommen. Einerseits kann eine eindeutige Kennung, welche bevorzugt gemäß RFC 4122 gebildet wurden, beim Senden der inhaltsverschlüsselten Nachricht an die Datenablageeinrichtung mit der inhaltsverschlüsselten Nachricht mitgesandt wird oder nach dem Empfangen einer inhaltsverschlüsselten Nachricht von der Datenablageeinrichtung erzeugt wird, wobei die eindeutige Kennung bevorzugt beim Beantworten der empfangenen Nachricht an die Datenablageeinrichtung mitgesandt wird. Die eindeutige Kennung kann auch zur Umsetzung einer Protokollfunktion herangezogen werden.

In der letztgenannten Variante ist besonders bevorzugt, wenn die sendende Institution oder der sendende Anbieter eine initialisierende Nachricht mit Angabe eines designierten Empfängers an die Datenablageeinrichtung sendet, wobei die Datenablageeinrichtung daraufhin die bevorzugt von ihr erzeugte eindeutige Kennung zusammen mit einem Zertifikat des designierten Empfängers an die sendende Institution oder den sendenden Anbieter übermittelt. Die Datenablageeinrichtung kann hierbei vermerken, wer die initialisierende Nachricht gesandt (sendende Institution oder sendender Anbieter) hat und wessen Zertifikat angefordert wurde (empfangene Institution oder empfangender Anbieter). Die eindeutige Kennung kann somit eine der Datenablageeinrichtung bekannte Korrelation zwischen Sender und Empfänger bilden, noch bevor die inhaltsverschlüsselte Nachricht an die Datenablageeinrichtung übertragen wurde.

In den letztgenannten Varianten kann insbesondere vorgesehen werden, dass die Datenablageeinrichtung eine Liste mit eindeutigen Kennungen führt, wobei jeder eindeutigen Kennung ein Status zugewiesen wird, aus welcher bevorzugt eine Statistik über Anfragen und Beantwortungen gebildet wird. Der Status kann beispielsweise sein: inhaltsverschlüsselte Nachricht vom Sender erhalten oder nicht, inhaltsverschlüsselte Nachricht vom Empfänger abgerufen oder nicht, inhaltsverschlüsselte Nachricht vom Empfänger mittels einer inhaltsverschlüsselten Antwort beantwortet oder nicht, inhaltsverschlüsselte Antwort vom Sendet abgerufen oder nicht. Die eindeutige Kennung ermöglicht über den Status insbesondere eine einfache Umsetzung der Protokollfunktion.

Die hierin beschriebenen Verfahren eignen sich insbesondere für Use-Cases, bei denen die Nachricht eine Anfrage von personenbezogenen Daten ist, welche von einer sendenden Institution über die Datenablageeinrichtung an einen empfangenden Anbieter gesandt wird, in welchem Fall der Anbieter die Anfrage mit im Wesentlichen demselben oder einem leicht abgewandelten Verfahren mit einer Antwort mit personenbezogenen Daten beantworten kann. Weiters eignet sich das hierin beschriebene Verfahren auch zum Senden einer Initiativantwort mit personenbezogenen Daten von einem Anbieter an eine Institution.

In jenen Fällen, bei denen eine Anfrage mit einer Antwort beantwortet wird, können diese über die eindeutige Kennung in der Datenablageeinrichtung korreliert werden. Dies kann insbesondere für eine Protokollfunktion ausgenutzt werden, wobei mit einer Anfrage Formulardaten (z.B. eine Rechtsgrundlage, auf welcher die Anfrage basiert und/oder ein Aktenzeichen bzw. eine Geschäftszahl einer Straftat, zu der die Anfrage zugehörig ist) ohne Inhaltsverschlüsselung - d.h. nur mit Transportverschlüsselung - und mit einer Antwort Protokolldaten (z.B. Zeitspannen, seit der die personenbezogenen Daten beim jeweiligen Anbieter gespeichert waren und/oder eine Anzahl an übermittelten Datensätzen) ohne Inhaltsverschlüsselung - d.h. nur mit Transportverschlüsselung - an die Datenablageeinrichtung gesandt werden und die Formulardaten und die Protokolldaten mittels der eindeutigen Kennung korreliert werden. Weiters können hierbei die Zeitpunkte der Einlagen der Anfragen und Antworten bei der Datenablageeinrichtung durch ebendiese aufgezeichnet werden, was insbesondere zum Zwecke der Erstellung einer Statistik vorteilhaft ist.

Im Folgenden werden bevorzugte und nicht einschränkende Ausführungsformen durch Verweis auf die angehängten Zeichnungen erläutert.
Figur 1 zeigt eine schematische Übersicht eines Systems zur Vorratsdatenspeicherung, in dem das erfindungsgemäße Verfahren ausgeführt wird.
Figur 2 zeigt das Schema der Inhaltsverschlüsselung und Transportverschlüsselung des erfindungsgemäßen Verfahrens für einen Anfrage-Antwortverlauf.
Figur 3 zeigt das Schema der Inhaltsverschlüsselung und Transportverschlüsselung des erfindungsgemäßen Verfahrens für eine Initiativantwort.
Figur 4 zeigt ein erweitertes Schema zum verschlüsselten Kommunizieren mit dem erfindungsgemäßen Verfahren.

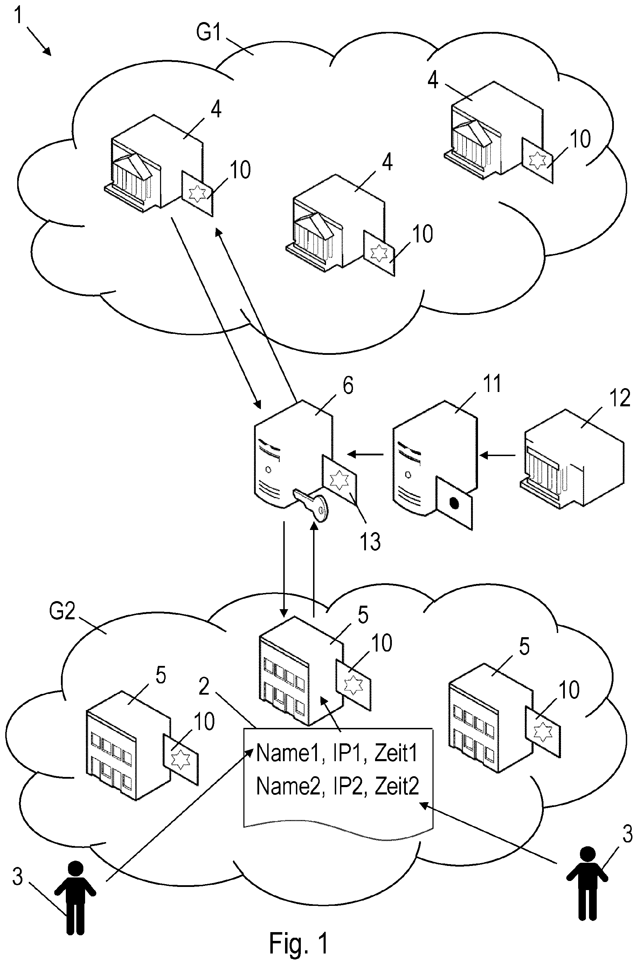

Figur 1 zeigt ein System 1 zum Speichern und Abrufen von personenbezogenen Daten 2. Unter personenbezogenen Daten 2 werden hierin Daten verstanden, die Personen 3 zugehörig sind und der Allgemeinheit nicht zugängig sein sollen, insbesondere um die Privatsphäre der Personen 3 zu schützen. Dennoch ist es aus verschiedenen Gründen erforderlich oder von den Personen selbst erwünscht, dass die personenbezogenen Daten 2 für einen bestimmten Zeitraum gespeichert werden.

Beispielsweise könnte es erforderlich sein, dass sicherheitskritische Institutionen 4 wie Sicherheits- und Strafverfolgungsbehörden auf Telekommunikationsdaten von Personen 3 zugreifen können, um Gefahren im Verzug abzuwenden oder Straftaten aufzuklären. In diesem Fall sammeln Anbieter 5 wie Telekommunikationsprovider Telekommunikationsdaten, d.h. personenbezogene Daten 2, von Personen 3, die über Mobilfunk, über das Internet etc. kommunizieren. Die Telekommunikationsdaten können über einen gewissen Zeitraum gespeichert werden und auf diese Weise den Sicherheits- und Straffverfolgungsbehörden zur Verfügung gestellt werden.

Die Erfindung ist jedoch nicht auf den Zugriff auf von Tekelommunikationsunternehmen gespeicherten Telekommunikationsdaten beschränkt, sondern könnte in anderen Systemen eingesetzt werden, in denen Institutionen 4 mit Anbietern 5 kommunizieren. Beispielsweise könnten die Anbieter 5 Labore sein, die Befunde oder andere gesundheitsbezogene Daten, d.h. personenbezogene Daten 2, von Personen 3 speichern und die Institutionen 4 könnten z.B. Krankenhäuser oder Arztpraxen sein.

Aus den obigen Ausführungen ist auch ersichtlich, dass es in diesem System nicht nur eine Institution 4 und/oder einen Anbieter 5 geben kann, sondern es könnte eine erste Gruppe G1 von zumindest zwei Institutionen 4 und eine zweite Gruppe G2 von zumindest zwei Anbietern 5 vorliegen. Ziel ist es, dass in diesem System eine Institution 4 bei einem der Anbieter 5 nach personenbezogenen Daten 2 anfragt. Der Anbieter 5 soll daraufhin die personenbezogenen Daten 2 an genau diese Institution 4 senden.

Um das vorstehende zusammenzufassen sei nochmals hervorgehoben, dass genau ein Anbieter 5 personenbezogene Daten 2 an eine Institution 5 senden soll. Es muss oder soll nicht vorgesehen werden, dass eine Institution 5 innerhalb dieses Systems 1 mit einer anderen Institution 5 kommuniziert bzw. dass ein Anbieter 5 innerhalb dieses Systems 1 mit einem anderen Anbieter 5 kommuniziert.

Es versteht sich, dass in diesem System 1 zur Kommunikation von personenbezogenen Daten 2 höchste Sicherheitsvorkehrungen vorliegen sollen, sodass sichergestellt wird, dass die personenbezogenen Daten 2 derart an die Institution 4 gesendet werden, dass nur diese die personenbezogenen Daten 2 lesen kann. Im Folgenden werden besondere Sicherheitsvorkehrungen beschrieben, welche diese sichere Kommunikation ermöglichen.

In einem ersten Schritt soll vorgesehen werden, dass die Institutionen 4 nicht unmittelbar mit den Anbietern 5 kommunizieren, da dies bewirken könnte, dass die Anbieter 5 die personenbezogenen Daten 2 in einem "Bulk" und/oder in einer später nicht mehr nachvollziehbaren Art und Weise an die Institutionen 4 senden könnten. Um dies umzusetzen, wird eine Datenablageeinrichtung 6 vorgesehen, welche ein Bindeglied zwischen der ersten Gruppe G1 und der zweiten Gruppe G2 darstellt. Bei der Datenablageeinrichtung 6 handelt es sich jedoch nicht um einen der Öffentlichkeit zugänglichen Server wie einen Cloud-Server, sondern um eine speziell für dieses System 1 vorgesehene Recheneinheit zur Kommunikation mit Institutionen 4 der ersten Gruppe G1 und Anbietern 5 der zweiten Gruppe G2. Die Datenablageeinrichtung 6 ist derart ausgebildet, dass nur Institutionen 4 der ersten Gruppe G1 und Anbieter 5 der zweiten Gruppe G2 Daten von dieser abrufen können. Die Datenablageeinrichtung 6 kann insbesondere einen dedizierten Server, welcher die Kommunikation mit den Institutionen 4 und Anbietern 5 durchführt, und einen Datenbankserver umfassen, der die Speicherungen bzw. Zwischenspeicherungen der unten erläuterten inhaltsverschlüsselten Nachrichten und der Protokollierung vornimmt.

Im System 1 wird somit vorgesehen, dass die Institutionen 4 nicht unmittelbar mit den Anbietern 5 kommunizieren können, sondern nur über die Datenablageeinrichtung 6 mit diesen kommunizieren können. Dies hat den Vorteil, dass die Datenablageeinrichtung 6 als unabhängige Schnittstelle zwischen den Institutionen 4 und den Anbietern 5 agieren kann. Gleichzeitig soll jedoch vorgesehen werden, dass die Datenablageeinrichtung 6 sowohl die personenbezogenen Daten 2 als auch die Anfragen zu personenbezogenen Daten 2 nicht selbst lesen können soll, um zu verhindern, dass die Betreiber der Datenablageeinrichtung 6 oder dritte Personen, die sich einen unberechtigten Zugang zur Datenablageeinrichtung 6 verschafft haben, die personenbezogenen Daten 2 in der Datenablageeinrichtung 6 auslesen könnten.

Um dies umzusetzen, wird sowohl eine Transportverschlüsselung als auch eine Inhaltsverschlüsselung vorgesehen. Die Transportverschlüsselung wird zwischen den tatsächlichen Kommunikationspartnern vorgesehen, d.h. zwischen einer der Institutionen 4 und der Datenablageeinrichtung 6 einerseits und zwischen einem der Anbieter 5 und der Datenablageeinrichtung 6 andererseits. Die Inhaltsverschlüsselung wird jedoch zwischen der jeweiligen Institution 4 und dem jeweiligen Anbieter 5 vorgesehen, d.h. die gesendete Nachricht ist auch, während sie an der Datenablageeinrichtung 6 vorliegt, sei es transient oder persistent, weiterhin verschlüsselt.

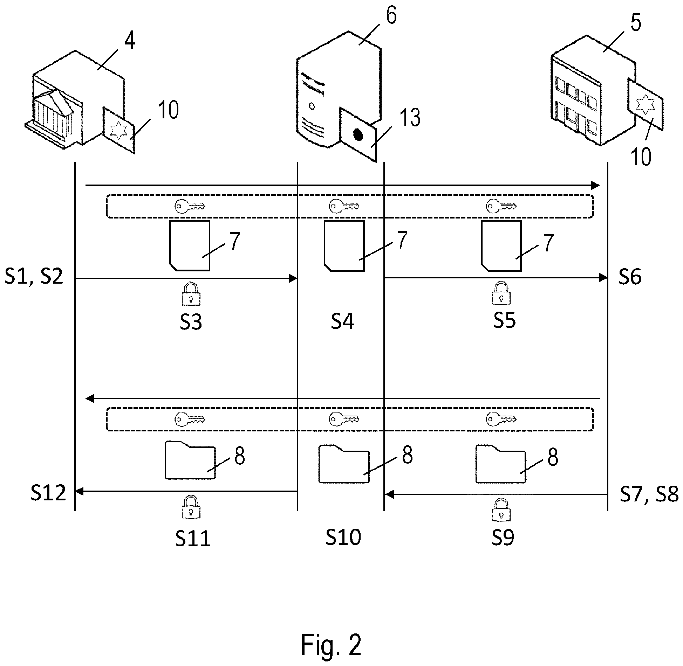

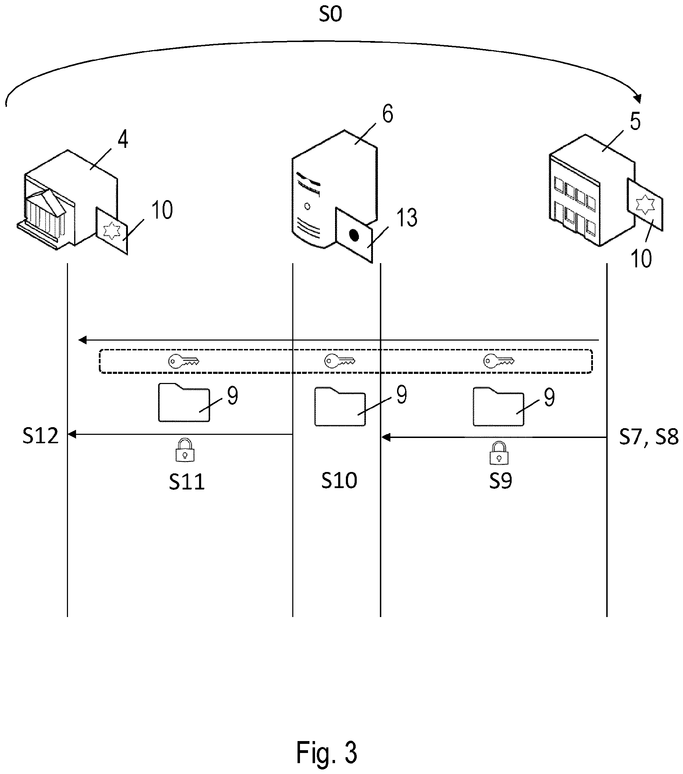

Insbesondere können mit dieser Art der Kommunikation zwei Anwendungsfälle implementiert werden, und zwar erstens eine verschlüsselte Anfrage einer Institution 4 mit einer verschlüsselten Antwort eines Anbieters 5 (Figur 2) und zweitens eine verschlüsselte Initiativantwort eines Anbieters 5 in Reaktion auf eine informelle Anfrage einer Institution 4 (Figur 3).

Im Verfahren von Figur 2 kann die Institution 4 beispielsweise eine Strafverfolgungsbehörde sein, die personenbezogene Daten 2 im Zuge einer Ermittlung benötigt, welche bei einem Anbieter 5 wie einem Telekommunikationsprovider vorliegen (wobei dies jedoch nur einer von vielen Beispielfällen ist). Diese Institution 4 erstellt daraufhin in einem Schritt S1 eine Nachricht, hier eine Anfrage 7, in welcher konkrete Angaben zur Herausgabe von personenbezogenen Daten 2 angeführt sein können, z.B. eine Identifikation der Person 3, zu welcher die personenbezogene Daten 2 angefordert werden und gegebenenfalls einen Zeitraum, über welchen die personenbezogenen Daten 2 angefordert werden.

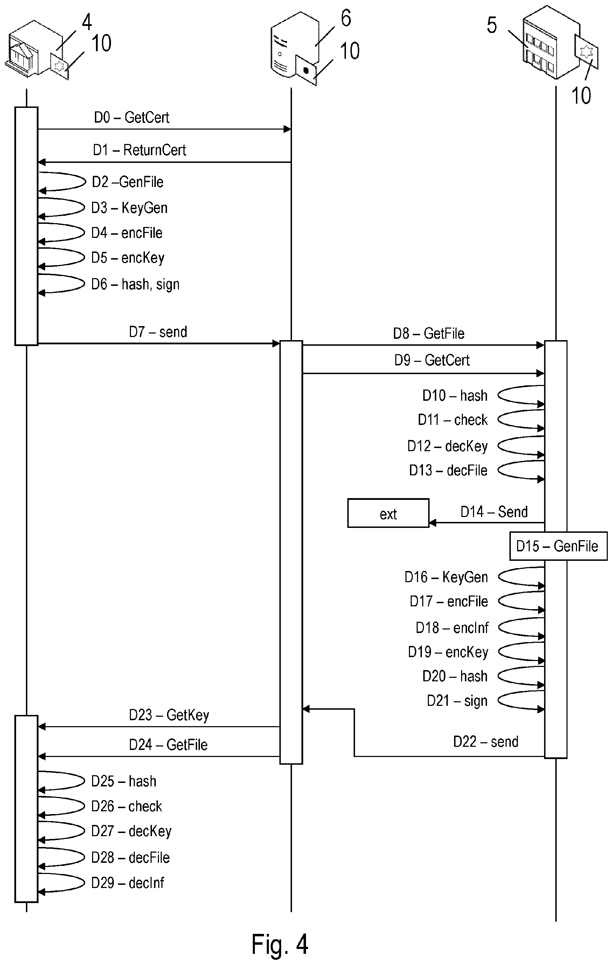

Diese Anfrage 7 wird in einem zweiten Schritt S2 derart inhaltsverschlüsselt, dass sie nur von einem bestimmten Anbieter 5 entschlüsselbar ist. Methoden hierfür werden in Bezug auf Figur 4 erläutert. Danach sendet die Institution 4 die inhaltsverschlüsselte Anfrage 7 mittels einer transportverschlüsselten Kommunikation im Schritt S3 an die Datenablageeinrichtung 6. Die transportverschlüsselte Kommunikation ist bevorzugt über HTTPS bzw. TLS auf Basis X.509 gesichert.

Danach empfängt die Datenablageeinrichtung 6 die inhaltsverschlüsselte Anfrage 7 und speichert diese im Schritt S4 zumindest temporär ab. Zu diesem Zeitpunkt liegt die Anfrage 7 daher an der Datenablageeinrichtung 6 vor, kann jedoch von Betreibern der Datenablageeinrichtung 6 oder dritten Personen nicht gelesen werden, da sie weiterhin inhaltsverschlüsselt ist. Die Datenablageeinrichtung 6 informiert daraufhin den Anbieter 5, dass eine inhaltsverschlüsselte Anfrage 7 vorliegt. Die Kenntnis darüber, an welchen Anbieter 5 die inhaltsverschlüsselte Anfrage 7 gerichtet ist, kann die Datenablageeinrichtung 6 erhalten, indem die Institution 4 entsprechende Daten ohne Inhaltsverschlüsselung, d.h. von der Datenablageeinrichtung 6 auslesbar, an die Datenablageeinrichtung 6 sendet (z.B. Formulardaten) oder über eine eindeutige Kennung, die für eine oder mehrere Kommunikationen zwischen derselben Institution 4 und demselben Anbieter 5 vergeben wird.

Im Schritt S5 sendet die Datenablageeinrichtung 6 die inhaltsverschlüsselte Anfrage 7 mittels einer transportverschlüsselten Kommunikation an den Anbieter 5. Die transportverschlüsselte Kommunikation ist auch hier bevorzugt über HTTPS bzw. TLS auf Basis X.509 gesichert.

Im Schritt S6 entschlüsselt der Anbieter 5 die bis zu diesem Zeitpunkt inhaltsverschlüsselte Anfrage 7 (z.B. gemäß dem unten erläuterten Schema) und kann danach deren Inhalt auslesen. Auf Basis der entschlüsselten Anfrage 7 kann der Anbieter 5 die gewünschten personenbezogenen Daten 2 z.B. aus einer internen Datenbank extrahieren und im Schritt S7 eine Antwort 8 erstellen, welche die angeforderten personenbezogenen Daten 2 enthält. In einem Schritt S8 wird die Antwort 8 derart inhaltsverschlüsselt, dass sie nur von einem bestimmten Anbieter 5 entschlüsselbar ist. Methoden hierfür können gleich wie bei der Inhaltsverschlüsselung der Anfrage 7 vorgesehen werden.

Analog zu den Schritten S3, S4, S5 sendet der Anbieter 5 nun die inhaltsverschlüsselte Antwort 8 mittels einer transportverschlüsselten Kommunikation im Schritt S9 an die Datenablageeinrichtung 6. Die Datenablageeinrichtung 6 empfängt die inhaltsverschlüsselte Antwort 8 und speichert diese im Schritt S10 zumindest temporär ab. Die Datenablageeinrichtung 6 informiert daraufhin die Institution 4, dass eine inhaltsverschlüsselte Antwort 8 vorliegt. Im Schritt S11 sendet die Datenablageeinrichtung 6 die inhaltsverschlüsselte Antwort 8 mittels einer transportverschlüsselten Kommunikation an die Institution 4. Im Schritt S12 entschlüsselt die Institution 4 die bis zu diesem Zeitpunkt inhaltsverschlüsselte Antwort 8 und kann danach die personenbezogenen Daten 2 auslesen. Zu diesem Zeitpunkt ist das Verfahren abgeschlossen, da die Institution 4 die gewünschten personenbezogenen Daten 2 innehält.

Figur 3 zeigt einen weiteren Anwendungsfall, der insbesondere dann zum Einsatz kommen kann, wenn Gefahr im Verzug vorliegt und die personenbezogenen Daten 2 rasch an die Institution 4 gesandt werden sollen. Hier sendet die Institution 4 keine formale Anfrage über die Datenablageeinrichtung 6 an den Anbieter 5, sondern teilt diesen informell in einem Schritt S0 mit, dass personenbezogene Daten 2 benötigt werden. Der Anbieter 5 bereitet hierbei in Reaktion auf die informelle Anfrage eine sogenannte Initiativantwort 9 vor, welche die personenbezogenen Daten 2 enthält und auch inhaltsgleich mit der Antwort 8 aus dem Anwendungsfall von Figur 2 sein kann. Die derart erstellte Initiativantwort 9 kann nun im Schritt S8 verschlüsselt und in den Schritten S9 bis S 11 an die Institution 4 gesandt werden, wo die Initiativantwort 9 im Schritt S13 entschlüsselt werden kann. Die Schritte S7, S8, S9, S10, S11 und/oder S12 können gleich wie beim Anwendungsfall der Figur 2 durchgeführt werden.

Beim Anwendungsfall der Figur 3 kann nachträglich vorgesehen werden, dass zur Nachvollziehbarkeit der informellen Anfrage des Schritts S0 nach oder vor dem Erhalt der personenbezogenen Daten 2 eine "korrigierende" Anfrage 7 an die Datenablageeinrichtung 6 und/oder an den Anbieter 5 gesandt werden kann, d.h. die Schritte S1-S4 bzw. die Schritte S1-S6 können auch nach einem der Schritte S7 bis S12 durchgeführt werden. Dies dient insbesondere dazu, dass in der Datenablageeinrichtung 6 jede Antwort 8 einer Anfrage 7 zugeordnet werden kann.

Im Folgenden wird auf weitere besondere Aspekte der gesicherten Kommunikation über die Datenablageeinrichtung 6 eingegangen, die bei allen hierin beschriebenen Verfahren, insbesondere bei jenen der Figuren 3 und 4, zum Einsatz kommen können.

Da im vorliegenden Fall insbesondere nur wohldefinierte Teilnehmer des Systems 1 vorliegen, kann insbesondere ein in sich abgeschlossenes Zertifikatsystem vorgesehen werden, wodurch verhindert werden kann, dass auf die Zertifikate von öffentlich zugänglichen Autorisierungsstellen zurückgegriffen werden muss. Konkret kann vorgesehen werden, dass für jedes Institut 4 der ersten Gruppe G1 und für jeden Anbieter 5 der zweiten Gruppe G2 genau ein Zertifikat 10 vorliegt. Die Zertifikate 10 haben bevorzugt ein Format nach X.509 v3.

Die Zertifikate 10 der Institutionen 4 und Anbieter 5 umfassen jeweils einen öffentlichen Schlüssel, der zu einem jeweiligen privaten Schlüssel der Institutionen 4 und Anbieter 5 zugehörig ist. Die Zertifikate 10 werden von einer eigenen Zertifizierungsstelle 11 (Figur 1) erzeugt und anschließend in der Datenablageeinrichtung 6 hinterlegt. Dies geschieht im Wesentlichen als Vorbereitung des Kommunikationsverfahren, wobei auch später Institutionen 4 und Anbieter in die Gruppen G1, G2 eintreten können. Hierbei wird eine Registrierungsstelle 12 vorgesehen, welche eine Liste mit den Teilnehmern der Gruppen G1, G2 führt. An dieser Stelle sei erwähnt, dass alle Institutionen 4 der ersten Gruppe G1 in einer ersten Liste und alle Anbieter 5 in einer zweiten Liste geführt werden können. Diese Listen können von den Institutionen 4 und/oder Anbietern 5 von der Datenablageeinrichtung 6 abgerufen werden. Beispielsweise kann eine Institution 4 eine Liste der Anbieter 5 im System 1 von der Datenablageeinrichtung 6 abrufen, damit diese weiß, an welche Anbieter 5 die Anfragen 7 gerichtet werden können. In der Folge könnte eine Institution 4 im Wesentlichen gleiche Anfragen 7 an alle Anbieter 5 im System 1 richten, d.h. für jeden Anbieter 5 wird eine eigene inhaltsverschlüsselte Anfrage 7 an die Datenablageeinrichtung 6 gesandt und das hierin beschriebene Verfahren wird entsprechend für jeden Anbieter 5 durchgeführt.

Weiters können optional alle Zertifikate 10 der Institutionen 4 und Anbieter 5 mit einem privaten Root-Schlüssel signiert sein, zu dem ein zugehöriges Root-Zertifikat 13 vorliegt. Auch das Root-Zertifikat 13 kann in der Datenablageeinrichtung 6 hinterlegt sein.

Weiters kann optional von jedem Zertifikat 10 ein Hash-Wert erzeugt werden, um einen sogenannten Fingerprint zu erzeugen, wobei diese Hash-Werte auf einer gesonderten Website oder einem anderen den Institutionen 4 und Anbietern 5 zugänglichen Datenträger hinterlegt werden können. Die Hash-Werte werden üblicherweise unmittelbar erzeugt, nachdem die Zertifikate 10 an der Zertifizierungsstelle 11 erzeugt wurden, d.h. bevor sie an die Datenablageeinrichtung 6 gesandt wurden.

Mit den soeben beschriebenen Voraussetzungen kann das Verfahren der Figuren 2 und 3 nun um einige Sicherheitsaspekte erweitert werden. Figur 4 zeigt einen entsprechenden Ablauf des Verfahrens, in dem die oben genannten Zertifikate 10 zum Einsatz kommen.

In Figur 4 wird wieder davon ausgegangen, dass eine Institution 4 personenbezogene Daten 2 von einem bestimmten Anbieter 5 erhalten will.

Eingangs frägt die Institution 4 bei der Datenablageeinrichtung 6 in einem Schritt D00 nach dem Zertifikat 10 des Anbieters 5 an, das einen öffentlichen Schlüssel des Anbieters 5 umfasst. In einem Schritt D1 sendet die Datenablageeinrichtung 6 das Zertifikat dieses Anbieters 5 an die Institution 4. Das erhaltene Zertifikat kann validiert werden, z.B. indem auch das Root-Zertifikat 13 von der Datenablageeinrichtung 6 empfangen wird, sodass der darin enthaltene öffentliche Schlüssel eingesetzt werden kann, um das zuvor mit dem privaten Root-Schlüssel signierte Zertifikat 10 zu validieren.

Zu diesem Zeitpunkt (oder auch davor oder danach) kann die Datenablageeinrichtung 6 auch eine eindeutige Kennung (z.B. uniqueID, kann nach RFC 4122 gebildet werden) an die Institution 4 senden. Jeder Nachrichtenaustausch - sei es eine Behördenanfrage oder eine Initiativantwort - wird von der Datenablageeinrichtung 6 mit einer eindeutigen Transaktionsnummer versehen, welche die Nachvollziehbarkeit der durchgeführten Anfragen gewährleistet. Da die Institution 4 bereits nach dem Zertifikat 10 des Anbieters 5 angefragt hat, kann die Institution die eindeutige Kennung mit der Institution 4 und dem Anbieter 5 verknüpfen, sodass eine inhaltsverschlüsselte Anfrage 7 unter Angabe der eindeutigen Kennung dem richtigen Anbieter 5 zugewiesen werden kann. Diese eindeutige Kennung soll bzw. kann von der Datenablageeinrichtung 6 automatisiert vergeben werden. Über die eindeutige Kennung kann auch innerhalb der Datenablageeinrichtung 6 eine Antwort 8 einer Anfrage 7 zugeordnet werden, was relevant ist, da die Antwort 8 an sich inhaltsverschlüsselt und daher an sich nicht auslesbar bzw. zuordenbar sein wird.

Im Schritt D2 (Schritt S1 in Figur 2) erzeugt die Institution 4 einerseits die eigentliche Anfrage 7, die nur vom Anbieter 5 ausgelesen werden darf, und andererseits auch optionale Formulardaten, die von der Datenablageeinrichtung 6 ausgelesen werden sollen. Die Formulardaten enthalten beispielsweise den Anbieter 5 (bzw. einen Namen oder eine Adresse des Anbieters 5), damit für die Datenablageeinrichtung 6 ersichtlich ist, welcher Anbieter 5 notifiziert werden soll (sofern dies nicht schon aus der eindeutigen Kennung hervorgeht), wenn die inhaltsverschlüsselte Anfrage 7 in der Datenablageeinrichtung 6 vorliegt. Weiters können die Formulardaten auch eine oder mehrere der folgenden Informationen umfassen: eine Geschäftszahl (z.B. Aktenzahl bzw. richterliche oder staatsanwaltschaftliche Referenz), eine Rechtsgrundlage, eine Angabe über die Priorität, eine Angabe über Gefahr im Verzug und eine behördenseitige Information.

Zur Vorbereitung auf das Inhaltsverschlüsseln der Anfrage 7 wird die Anfrage 7 als Datei (insbesondere als PDF) bereitgestellt. Weiters wird die Anfrage 7 optional signiert, insbesondere über den privaten Schlüssel der Institution 4, was über den öffentlichen Schlüssel im Zertifikat 10 dieser Institution 4 verifizierbar ist, und/oder über eine externe Signatur wie eine Amtssignatur, die durch eine externe Instanz überprüfbar ist. Danach kann optional ein erster Hash-Wert der (gegebenenfalls signierten) Anfrage 7 erstellt werden, wonach abermals eine Datei mit dem ersten Hash-Wert als Inhalt erzeugt wird, welche optional wie eben ausgeführt mit dem Zertifikat 10 des Anbieters 5 oder der externen Signatur signiert wird.

Weiters wird im Schritt D3 ein symmetrischer Schlüssel erzeugt. Eingangs wird hierfür beispielsweise ein Entropiepool gefüllt, bevorzugt über verschiedene Quellen wie eine gehashte UniqueID, Mausbewegungen, die dediziert hierfür vom Benutzer gefordert werden, Zeitabstände beim Tippen in Formularfeldern, wenn vorhanden, ein integrierter Zufallsgenerator eines Browsers, eine aktuelle Zeit z.B. im Millisekundenbereich, Hash-Werte von Passwörtern, Hash-Werte von Daten, Hash-Werte des DOM des Browsers und/oder einer Anwendung eines kryptographisch sicheren Zufallszahlengenerators (z.B. ISAAC9 oder Fortuna10). Im Anschluss wird über den Entropiepool ein sicheres Passwort für die Generierung des symmetrischen Schlüssels gewonnen werden. Der symmetrische Schlüssel ist bevorzugt ein Schlüssel nach AES (Advanced Encryption Standard), bevorzugt nach AES-256.

Im Schritt D4 werden die bevorzugt signierte Datei mit der Anfrage und (wenn vorhanden) die bevorzugt signierte Datei mit dem Hash-Wert mit dem symmetrischen Schlüssel verschlüsselt, sodass nun die inhaltsverschlüsselte Anfrage 7 vorliegt.

Damit der Anbieter 5 die inhaltsverschlüsselte Anfrage 7 entschlüsseln kann, wird im Schritt D5 der symmetrische Schlüssel mit dem öffentlichen Schlüssel verschlüsselt, der im Zertifikat 10 des Anbieters 5 enthalten ist.

Zu diesem Zeitpunkt liegen somit drei Elemente vor: Die unverschlüsselten Formulardaten, die inhaltsverschlüsselte Anfrage 7 und der verschlüsselte symmetrische Schlüssel. Es versteht sich, dass der verschlüsselte symmetrische Schlüssel nicht zwingend vorhanden sein muss, z.B. wenn die Anfrage 7 unmittelbar mit dem öffentlichen Schlüssel im Zertifikat 10 des Anbieters verschlüsselt wird. Auch die Formulardaten sind nur optional und müssen nicht immer vorgesehen werden.

In einem Schritt D6 wird optional ein zweiter Hash-Wert über alle vorliegenden Elemente (unverschlüsselten Formulardaten, die inhaltsverschlüsselte Anfrage 7 und der verschlüsselte symmetrische Schlüssel) gebildet und mit dem privaten Schlüssel der Institution 4 signiert.

Im Schritt D7 werden die unverschlüsselten Formulardaten, die inhaltsverschlüsselte Anfrage 7, der verschlüsselte symmetrische Schlüssel und der signierte zweite Hash-Wert von Schritt D6 (sofern jeweils vorhanden) transportverschlüsselt, z.B. über HTTPS, an die Datenablageeinrichtung 6 gesandt. Danach kann die Datenablageeinrichtung 6 den in den Formulardaten angegebenen oder über die eindeutige Kennung ermittelbaren Anbieter 5 informieren, dass eine inhaltsverschlüsselte Anfrage 7 abholbereit ist.

Der Anbieter 5 kann in einem Schritt D8 die für ihn in der Datenablageeinrichtung 6 vorliegenden Daten abrufen, d.h. die inhaltsverschlüsselte Anfrage 7 und gegebenenfalls die Formulardaten und/oder den verschlüsselten symmetrischen Schlüssel und/oder den signierten Hash-Wert. In einem Schritt D9 wird das Zertifikat 10 jener Institution 4 an den Anbieter 5 gesandt, von der die inhaltsverschlüsselte Anfrage 7 stammt. Das Zertifikat 10 kann mittels des Root-Zertifikats 13 validiert werden.

Mittels des Zertifikats 10 der Institution 4 kann nun die Herkunft, d.h. die Signatur, der von der Datenablageeinrichtung 6 abgerufenen Daten verifiziert werden. Insbesondere kann die Signatur des signierten zweiten Hash-Wertes überprüft und in Schritt D11 verglichen werden, ob der zweite Hash-Wert mit einem Hash-Wert übereinstimmt, der in einem Schritt D10 über die vorliegenden Elemente (unverschlüsselten Formulardaten, die inhaltsverschlüsselte Anfrage 7 und der verschlüsselte symmetrische Schlüssel) gebildet wird.

Danach wird der bis dato verschlüsselt vorliegende symmetrische Schlüssel im Schritt D12 mit dem privaten Schlüssel des Anbieters 5 entschlüsselt, sodass dem Anbieter 5 der symmetrische Schlüssel vorliegt.

Mit dem symmetrischen Schlüssel können nun im Schritt D13 die inhaltsverschlüsselte Anfrage 7 und (wenn vorhanden) die bevorzugt signierte Datei mit dem ersten Hash-Wert entschlüsselt werden.

Nun kann die Signatur der Datei mit dem ersten Hash-Wert überprüft werden, was auch dadurch erfolgen kann, indem diese Datei in einem Schritt D14 an eine externe Überprüfungsinstanz gesandt wird, z.B. wenn diese mit einer Amtssignatur signiert wurden. Dies ist insofern sicher, da die Datei mit dem ersten Hash-Wert keine Anfrageinformationen zu personenbezogenen Daten 2 enthält. Weiters kann nun verglichen werden, ob der erste Hash-Wert mit einem Hash-Wert übereinstimmt, der über die unverschlüsselte Anfrage 7 gebildet wird.

Es kann somit zusammengefasst werden, dass nun die Anfrage 7 unverschlüsselt vorliegt und überprüft werden konnte, dass die Anfrage 7 von einem im System 1 registrierten und zertifizierten Teilnehmer stammt. Es kann somit davon ausgegangen werden, dass die Anfrage 7 beantwortet werden kann. Hierzu extrahiert der Anbieter 5 im Schritt D15 die personenbezogenen Daten 2, die gemäß der Anfrage 7 geliefert werden sollen, und erstellt die Antwort 8. Die Antwort 8 wird üblicherweise als CSV-Datei erstellt, kann aber auch eine andere Form einnehmen. Sollte die Datengröße der abzusendenden personenbezogenen Daten 2 über einem Schwellwert liegen, können die folgenden Schritte auch zweimal durchgeführt werden, d.h. zwei unabhängige Antworten 8 gesandt werden, wobei den eindeutigen Kennungen unterschiedliche Laufnummern angehängt werden.

Im Wesentlichen gleicht das Verfahren zum Senden der Antwort 8 vom Anbieter 5 über die Datenablageeinrichtung 6 an die Institution 4 dem Verfahren zum Senden der Anfrage 7 von der Institution 4 über die Datenablageeinrichtung 6 an den Anbieter 5. Weiters kann jedoch eine Zusatzinformation zu den personenbezogenen Daten 2 inhaltsverschlüsselt an die Institution 4 gesandt werden, die gleichfalls mit dem symmetrischen Schlüssel verschlüsselt wird.

Weiters kann der Anbieter 5 Protokolldaten in der transportverschlüsselten Nachricht anhängen, die an die Datenablageeinrichtung 6 gesandt wird. Diese Protokolldaten werden in der Folge nicht an die Institution 4 gesandt, sondern verbleiben bei der Datenablageeinrichtung 6, damit eine Statistik erstellbar ist. Es versteht sich, dass dies optional ist.

Zusammengefasst kann der Anbieter 5 im Schritt D16 einen symmetrischen Schlüssel erzeugen, analog zu Schritt D3. Im Schritt D 17 kann die Antwort 8 analog zu Schritt D4 mit dem symmetrischen Schlüssel inhaltsverschlüsselt werden und im Schritt D18 können die Zusatzinformationen mit dem symmetrischen Schlüssel inhaltsverschlüsselt werden. Im Schritt D19 kann der öffentliche Schlüssel mit dem im Zertifikat 10 der Institution 4 enthaltenen öffentlichen Schlüssel verschlüsselt werden, analog zu Schritt D5. Im Schritt D20 kann ein Hash-Wert von der inhaltsverschlüsselten Antwort 8 und gegebenenfalls von der inhaltsverschlüsselten Zusatzinformation gebildet werden, wobei dieser dritte Hash-Wert im Schritt D21 mit dem privaten Schlüssel des Anbieters 5 signiert werden kann, jeweils analog zu Schritt D6.

Nun können die inhaltsverschlüsselte Antwort 8, die inhaltsverschlüsselten Zusatzinformationen, der verschlüsselte symmetrische Schlüssel, der signierte dritte Hash-Wert und die gegebenenfalls vorhandenen unverschlüsselten Protokolldaten im Schritt D22 transportverschlüsselt an die Datenablageeinrichtung 6 gesandt werden. Die Datenablageeinrichtung 6 kann nun die jeweilige Institution 4 informieren, dass die inhaltsverschlüsselte Antwort 8 vorliegt.

Die Institution 4 kann das Zertifikat 10 des Anbieters 5 im Schritt D23 von der Datenablageeinrichtung 6 abrufen, sofern es dies nicht bereits innehält und im Schritt D24 weiters die inhaltsverschlüsselte Antwort 8, die inhaltsverschlüsselten Zusatzinformationen, den verschlüsselten symmetrische Schlüssel und den signierten dritten Hash-Wert von der Datenablageeinrichtung 6 abrufen.

Mittels des Zertifikats 10 des Anbieters 5 kann nun die Herkunft, d.h. die Signatur, der von der Datenablageeinrichtung 6 abgerufenen Daten verifiziert werden. Insbesondere kann die Signatur des signierten dritten Hash-Wertes überprüft und in Schritt D26 verglichen werden, ob der dritte Hash-Wert mit einem Hash-Wert übereinstimmt, der in einem Schritt D25 über die vorliegenden Elemente (inhaltsverschlüsselte Antwort 8, die inhaltsverschlüsselten Zusatzinformationen, der verschlüsselte symmetrische Schlüssel) gebildet wird.

Danach wird der bis dato verschlüsselt vorliegende symmetrische Schlüssel im Schritt D27 mit dem privaten Schlüssel der Institution 4 entschlüsselt, sodass der Institution 4 der symmetrische Schlüssel vorliegt.

Mit dem symmetrischen Schlüssel können nun im Schritt D28 die inhaltsverschlüsselte Antwort 8 und (wenn vorhanden) im Schritt D29 die Zusatzinformationen entschlüsselt werden.

Zu diesem Zeitpunkt liegen die personenbezogenen Daten 2 und die gegebenenfalls vorhandenen Zusatzinformationen unverschlüsselt bei der Institution 4 vor und es konnte überprüft werden, ob diese vom richtigen Anbieter stammten. Das Verfahren kann als abgeschlossen betrachtet werden.

Wenn die personenbezogenen Daten 2 zu groß für eine einzige Antwort 8 waren, können die Schritte D15 bis D29 entsprechend oft wiederholt werden.

## Patentansprüche

1. Verfahren zur verschlüsselten Kommunikation in einem institutionellen Anfragesystem zum Abrufen von personenbezogenen Daten (2),
wobei das Verfahren in einem System (1) durchgeführt wird, in dem eine anfragende Institution (4), insbesondere Behörde, und ein personenbezogene Daten (2) speichernde Anbieter (5), insbesondere Telekommunikationsprovider, teilnehmen,
**dadurch gekennzeichnet, dass**
im genannten System (1) ferner eine Datenablageeinrichtung (6) vorgesehen ist und eine Institution (4) zum Senden einer Nachricht mit einer Anfrage (7) von personenbezogenen Daten (2) an einen Anbieter (5), und/oder ein Anbieter (5) zum Senden einer Nachricht mit einer Antwort (8) mit personenbezogenen Daten (2) an eine Institution (4) die folgenden Schritte durchführt:
durch die sendende Institution (4) oder den sendenden Anbieter (5):
- Erstellen der Nachricht,
- Inhaltsverschlüsseln der Nachricht, wobei die inhaltsverschlüsselte Nachricht nur von einer ausgewählten empfangenden Institution (4) oder einem ausgewählten empfangenden Anbieter (5) entschlüsselbar ist,
- Senden der inhaltsverschlüsselten Nachricht über eine transportverschlüsselte Kommunikation an die Datenablageeinrichtung (6),
durch die Datenablageeinrichtung (6):
- Empfangen und Speichern der inhaltsverschlüsselten Nachricht,
durch die empfangende Institution (4) oder den empfangenden Anbieter (5):
- Abrufen der inhaltsverschlüsselten Nachricht über eine transportverschlüsselte Kommunikation von der Datenablageeinrichtung (6),
- Entschlüsseln der Nachricht.

2. Verfahren nach Anspruch 1, wobei die sendende Institution (4) oder der sendende Anbieter (5) die folgenden Schritte durchführt:
- Erzeugen eines symmetrischen Schlüssels,
- Abrufen eines Zertifikats (10) der empfangenden Institution (4) oder des empfangenden Anbieters (5), an welche bzw. welchen die Nachricht gesandt werden soll, wobei das Zertifikat (10) bevorzugt von der Datenablageeinrichtung (6) abgerufen wird,
- Inhaltsverschlüsseln der Nachricht mit dem symmetrischen Schlüssel,
- Verschlüsseln des symmetrischen Schlüssels mit einem im Zertifikat (10) enthaltenen öffentlichen Schlüssels,
- Mitsenden des verschlüsselten symmetrischen Schlüssels mit der inhaltsverschlüsselten Nachricht,
und wobei die empfangende Institution (4) oder der empfangende Anbieter (5) zusätzlich die folgenden Schritte durchführt:
- Entschlüsseln des symmetrischen Schlüssels mit einem privaten Schlüssels der empfangenden Institution (4) bzw. des empfangenden Anbieters (5), und
- Entschlüsseln der inhaltsverschlüsselten Nachricht mit dem symmetrischen Schlüssel.

3. Verfahren nach Anspruch 2, wobei die sendende Institution oder der sendende Anbieter eine Zufallszahl erzeugt, bevorzugt indem ein Entropie-Pool gefüllt wird und daraus eine Zufallszahl gewonnen wird, und aus der Zufallszahl der symmetrische Schlüssel erstellt wird.

4. Verfahren nach einem der vorhergehenden Ansprüche, umfassend den Schritt des Signierens der inhaltsverschlüsselten Nachricht mit einem privaten Schlüssel der sendenden Institution (4) oder des sendenden Anbieters (5), wobei die empfangende Institution (4) oder der empfangende Anbieter (5) die Signatur der inhaltsverschlüsselten Nachricht mittels eines in einem Zertifikat (10) der sendenden Institution (4) oder des sendenden Anbieters (5) enthaltenen öffentlichen Schlüssels prüft.

5. Verfahren nach einem der vorhergehenden Ansprüche, umfassend den Schritt des Bildens eines ersten Hashwerts über die Nachricht vor dem Inhaltsverschlüsseln und transportverschlüsseltes Senden des ersten Hash-Wertes, entweder wie die Nachricht inhaltsverschlüsselt oder unverschlüsselt, an die Datenablageeinrichtung (6) und von der Datenablageeinrichtung (6) an die empfangende Institution (4) oder den empfangenden Anbieter (5), wobei die empfangende Institution (4) oder der empfangende Anbieter (5) nach dem Entschlüsseln überprüft, ob ein Vergleichs-Hash-Wert über die entschlüsselte Nachricht dem ersten Hash-Wert entspricht.

6. Verfahren nach Anspruch 6, wobei der erste Hash-Wert vor dem Senden zusätzlich mit einer extern überprüfbaren Signatur signiert wird und die empfangende Institution (4) oder der empfangende Anbieter (5) den signierten ersten Hash-Wert zur Überprüfung der Signatur an eine externe Überprüfungsinstanz sendet.

7. Verfahren nach einem der vorhergehenden Ansprüche, wobei die Datenablageeinrichtung (6) nach dem Empfangen und Speichern einer inhaltsverschlüsselten Nachricht den folgenden Schritt durchführt:
- Benachrichtigen jener Institution (4) oder jenes Anbieters (5), welche der designierte Empfänger der inhaltsverschlüsselten Nachricht ist, über das Vorliegen der Nachricht.

8. Verfahren nach einem der vorhergehenden Ansprüche, wobei eine Validierungseinrichtung vorgesehen ist, welche Vergleichs-Hash-Werte der Zertifikate (10) der Institutionen (4) und Anbieter (5) speichert, wobei die Institutionen (4) und Anbieter (5) Hash-Werte von Zertifikaten (10) bilden, die von der Datenablageeinrichtung (6) empfangen wurden und diese mit den Vergleichs-Hash-Werten vergleicht, die von der Validierungseinrichtung empfangen wurden.

9. Verfahren nach einem der vorhergehenden Ansprüche, wobei in der Datenablageeinrichtung (6) ein Root-Zertifikat (13) mit einem öffentlichen Root-Schlüssel hinterlegt ist und an die Institutionen (4) und Anbieter (5) gesandt wird, wobei Zertifikate (10) von Institutionen (4) und Anbietern (5) mit einem privaten Root-Schlüssel Root-signiert werden, bevor diese an die Institutionen (4) und Anbieter (5) gesandt werden, und wobei die Institutionen (4) und Anbieter (5) die Root-Signatur eines von der Datenablageeinrichtung (6) empfangenen Zertifikats (10) einer Institution (4) oder eines Anbieters (5) mittels des Root-Zertifikats (13) abgleichen.

10. Verfahren nach einem der vorhergehenden Ansprüche, wobei eine eindeutige Kennung, welche bevorzugt gemäß RFC 4122 gebildet wurde, beim Senden der inhaltsverschlüsselten Nachricht an die Datenablageeinrichtung (6) mit der inhaltsverschlüsselten Nachricht mitgesandt wird oder nach dem Empfangen einer inhaltsverschlüsselten Nachricht von der Datenablageeinrichtung (6) erzeugt wird, wobei die eindeutige Kennung bevorzugt beim Beantworten der empfangenen Nachricht an die Datenablageeinrichtung (6) mitgesandt wird.

11. Verfahren nach Anspruch 10, wobei die sendende Institution (4) oder der sendende Anbieter (5) eine initialisierende Nachricht mit Angabe eines designierten Empfängers an die Datenablageeinrichtung (6) sendet, wobei die Datenablageeinrichtung (6) daraufhin die bevorzugt von ihr erzeugte eindeutige Kennung zusammen mit einem Zertifikat (10) des designierten Empfängers an die sendende Institution (4) oder den sendenden Anbieter (5) übermittelt.

12. Verfahren nach Anspruch 10 oder 11, wobei die Datenablageeinrichtung (6) eine Liste mit eindeutigen Kennungen führt, wobei jeder eindeutigen Kennung ein Status zugewiesen wird, aus welcher bevorzugt eine Statistik über Anfragen (7) und zugehörigen Antworten (8) gebildet wird.

13. Verfahren nach einem der vorhergehenden Ansprüche, wobei die Nachricht eine Anfrage (7) von personenbezogenen Daten (2) ist, welche von einer sendenden Institution (2) über die Datenablageeinrichtung (6) an einen empfangenden Anbieter (5) gesandt wird, wobei der empfangende Anbieter (5) die folgenden Schritte durchführt:
Durch den empfangenen Anbieter (5):
- Erstellen einer Antwort (8) mit personenbezogenen Daten (2),
- Inhaltsverschlüsseln der Antwort (8), wobei die inhaltsverschlüsselte Antwort (8) nur von der sendenden Institution (4) entschlüsselbar ist,
- Senden der inhaltsverschlüsselten Antwort (8) über eine transportverschlüsselte Kommunikation an die Datenablageeinrichtung (6),
durch die Datenablageeinrichtung (6):
- Empfangen und Speichern der inhaltsverschlüsselten Antwort (8),
durch die sendende Institution (4):
- Abrufen der inhaltsverschlüsselten Antwort (8) über eine transportverschlüsselte Kommunikation von der Datenablageeinrichtung (6),
- Entschlüsseln der Antwort (8).

14. Verfahren nach Anspruch 13 in Kombination mit einem der Ansprüche 10 bis 12, wobei mit einer Anfrage (7) Formulardaten ohne Inhaltsverschlüsselung und mit einer Antwort (8) Protokolldaten ohne Inhaltsverschlüsselung an die Datenablageeinrichtung (6) gesandt werden und die Formulardaten und die Protokolldaten mittels der eindeutigen Kennung korreliert werden.

15. Verfahren nach einem der Ansprüche 1 bis 12, wobei die Nachricht eine Initiativantwort (9) mit personenbezogenen Daten (2) ist, welche von einem sendenden Anbieter (5) über die Datenablageeinrichtung an eine empfangende Institution (4) gesandt wird, wobei das Verfahren den folgenden Schritt vor dem Erstellen der Nachricht durchführt:
durch den sendenden Anbieter (5):
- Empfangen einer informellen Anfrage von personenbezogenen Daten (2), die von einem anderen Teilnehmer als der Datenablageeinrichtung (6) gesandt wird.
